# EUROPÄISCHE PATENTSCHRIFT

(11) **EP 0 991 313 B1**
(45) Veröffentlichungstag und Bekanntmachung des Hinweises auf die Patenterteilung: **18.12.2002**
(21) Anmeldenummer: 98936109.2
(22) Anmeldetag: 03.06.1998
(51) Int. Cl.: A01G 1/00

(54) **VEGETATIONSTRÄGER, BESTEHEND AUS EINER MATTE AUS INEINANDER GEWIRRTEN ORGANISCHEN FASERN**
VEGETATION SUPPORT CONSISTING OF A MAT OF ENTANGLED ORGANIC FIBRES
SUPPORT DE VEGETATION CONSTITUE D'UNE NATTE DE FIBRES ORGANIQUES ENTREMELEES

(30) Priorität: 17.06.1997 DE 19725403
(43) Veröffentlichungstag der Anmeldung: 12.04.2000
(73) Patentinhaber: Behrens, Wolfgang, D-27243 Gross Ippener (DE)
(72) Erfinder: Behrens, Wolfgang, D-27243 Gross Ippener (DE)
(74) Vertreter: Thömen, Uwe, Dipl.-Ing.
(86) Internationale Anmeldenummer: DE9801548
(87) Internationale Veröffentlichungsnummer: WO98057534

(56) Entgegenhaltungen:
- AU-A- 8 139 475
- DE-A- 3 631 716
- DE-A- 4 135 714
- DE-A- 4 329 957
- DE-U- 8 231 033
- US-A- 3 516 196
- US-A- 4 414 776

## Beschreibung

Die Erfindung betrifft einen Vegetationsträger, bestehend aus einer Matte aus ineinander gewirrten organischen Fasern gemäß dem Oberbegriff des Patentanspruchs 1.

Derartige fertig begrünte Vegetationsträger, wie sie beispielsweise aus der DE 36 31 716 C2 bekannt sind, dienen zur Grünverbauung von Dächern, geneigten Flächen, insbesondere Böschungen und anderen Flächen, welche mit einer Vegetationsschicht bedeckt werden sollen. Diese bisher bekannten Vegetationsträger weisen eine mittlere Schicht aus ineinander gewirrten Fasern, und jeweils eine obere untere Schicht aus einem anorganischen Vlies auf, welche durch Versteppen oder durch Vernadeln miteinander und mit der mittleren Schicht verbunden sind. Die Vliese der oberen und der unteren Schicht dienen dabei zur Armierung des Vegetationsträgers, d.h. sie nehmen bei der Verlegung auf geneigten Flächen entstehende Zugkräfte auf. Ferner dienen die Vliese dazu, ein Herauslösen der nur relativ lose in der mittleren Trägerschicht befindlichen Fasern zu verhindern.

Derartige Vegetationsträger haben sich weitgehend bewährt, insbesondere ist vorteilhaft an derartigen Vegetationsträgern, daß bereits vor dem eigentlichen Verlegen Substrat in den Vegetationsträger und keimfähiges Pflanzenmaterial auf den Vegetationsträger aufgebracht bzw. in den Vegetationsträger eingebracht ist und das keimfähig Pflanzenmaterial bereits in die Trägerschicht eingewachsen ist. Die Verluste von Pflanzenmaterial nach dem Aufbringen des derart fertig begrünten Vegetationsträgers auf die zu bebauende Fläche können daher gering gehalten werden.

Nachteilig an diesen bisher bekannten Vegetationsträgern ist allerdings, daß das Versteppen mit den oberen und unteren Vliesschichten relativ aufwendig und teuer ist und die Vliesschichten zudem aus einem nichtverrottbaren und nur bedingt recyclingfähigen Material bestehen. Gerade aber bei der naturnahen Grünverbauung von Flächen ist es aber wichtig, daß das Material des Vegetationsträgers aus einem vollrecyclingfähigen Material besteht, wobei ein besonderes Augenmerk darauf gelegt wird, daß für das Material des Vegetationsträgers möglichst nachwachsende Rohstoffe zum Einsatz gelangen.

Nachteilig ist ferner, daß die mittlere Trägerschicht dieser bekannten Vegetationsträger relativ schnell verrottet. Zwar ist eine Verrottung der Trägerschicht grundsätzlich erwünscht, jedoch schreiten die Verrottungsprozesse bei den bekannten Vegetationsträgern zu schnell voran, wodurch sie nach relativ kurzer Zeit unbrauchbar werden. Dies ist insbesondere dann von Nachteil, wenn der Vegetationsträger aus logistischen Gründen vor dem eigentlichen Verbauen relativ lange Zeit lagern muß, was dazu führen kann, daß ein Aufnehmen und Zusammenrollen des Vegetationsträgers zum Transport durch den vorangeschrittenen Verrottungsprozeß nicht mehr möglich ist.

Es hat sich ferner gezeigt, daß die Trägerschicht während großer Trockenheit zum Schrumpfen neigt. Dies führt dazu, daß bei einer Vegetationsträgerbreite von beispielsweise 1 m die Bahn um etwa 10 cm in der Breite schrumpft. Dies führt bei nebeneinander verlegten Bahnen zu nicht hinnehmbaren Lücken.

Aufgabe der Erfindung ist es, einen Vegetationsträger der eingangs genannten Art zu schaffen, der leicht und preiswert herzustellen ist, der aus einem recyclingfähigen Material besteht, der bei ausreichender Festigkeit unempfindlich gegen Trocknungsschrumpf ist und welcher möglichst langsam und kontrolliert verrottet.

Diese Aufgabe wird mit einem Vegetationsträger der eingangs genannten Art gelöst, welcher die Merkmale des kennzeichnenden Teils des Patentanspruchs 1 aufweist. Der erfindungsgemäße Vegetationsträger zeichnet sich dadurch aus, daß die Fasern der Matte Kokosfasern sind und daß die Sicherung gegen das Herauslösen der Fasern aus der Matte ein pflanzenverträgliches Bindemittel ist, welches auf die Oberflächen zumindest eines Teils der Fasern aufgebracht ist und durch welches die Fasern der Matte zumindest teilweise miteinander verklebt sind.

Hierdurch wird auf überraschend einfache Weise ein Vegetationsträger geschaffen, dessen den eigentlichen Vegetationsträger bildende Matte nicht durch auf- bzw. untergelegte Vliese gesichert ist, sondern dessen Fasern der Matte lediglich durch ein pflanzenverträgliches Bindemittel miteinander verbunden sind. Durch dieses Bindemittel, das vorteilhafterweise eine Kunststoffdispersion, Latex, eine Bitumenemulsion, ein Klebstoff, ein Harz oder ein Wachs ist, werden zum einen die Fasern der Matte zusammengehalten und zum anderen kann das Bindemittel, insbesondere dann, wenn es gemäß einer vorteilhaften Ausgestaltung der Erfindung auf die untere Seite der Matte aufgetragen ist, Zugkräfte aufnehmen, die beim Verlegen des Vegetationsträgers an geneigten Flächen entstehen.

Das Bindemittel gewährleistet ferner, insbesondere dann, wenn der größte Teil der Fasern an ihren Oberflächen mit dem Bindemittel benetzt ist, daß der Verrottungsprozeß der Matte relativ langsam voranschreitet. Es konnte ermittelt werden, daß sich der übliche Verrottungszeitraum von etwa 8 bis 12 Jahren auf etwa 12 bis 18 Jahre verlängern läßt. Zudem ist dem Bindemittel zuzuschreiben, daß die Fasern, nämlich die Kokosfasern, unempfindlich gegen durch Trockenheit bedingte Schrumpfungsprozesse werden.

Besonders bevorzugt wird es, wenn das Lösungsmittel Latex ist, das einerseits das Voranschreiten des Verrotungsprozesses der Fasern verlangsamt, andererseits aber biologisch voll abbaubar ist.

Aus der DE 43 29 957 A1 ist es zwar bezüglich einer Dränagematte aus Holzwolle bekannt, diese mit Latex zu benetzen und die Holzwollefasern zu verkleben, eine derartige Matte eignet sich aber nicht als Vegetationsträger, da die Hohlräume zwischen den relativ breiten Holzwollefasern zu breit sind, um Substrat und Wurzeln sicher zu halten. Zudem verrottet Holzwolle sehr schnell. Ähnliches gilt für eine aus der DE 82 31 033 U2 bekannte Tragschicht aus Holzwolle für einen Fertigrasen.

Wie bereits ausgeführt, kann das Bindemittel auf die Oberflächen aller Fasern aufgetragen sein, d. h., das Bindemittel ist in diesem Falle über den gesamten Querschnitt der Matte verteilt, oder das Bindemittel kann auf nur einer Seite der Matte aufgetragen sein. Im letzteren Fall sind also nur die an der unteren Seite der Matte herausragenden Fasern mit dem Bindemittel benetzt. Es hat sich nämlich gezeigt, daß es ausreichen kann, nur eine Seite, d. h., die untere Seite, der Matte mit dem Bindemittel zu versehen. Zwar werden dann nicht alle Fasern des Faserverbandes der Matte mit dem Bindemittel benetzt, was theoretisch dazu führen kann, daß die Fasern der oberen Seite der Matte sich aus dem Faserverband der Matte herauslösen könnten, jedoch hat sich in der Praxis gezeigt, daß diese Gefahr zu vernachlässigen ist. Wird das Bindemittel auf die untere Seite sehr dick aufgetragen, entsteht eine relativ dicke Schicht des Bindemittels als "Sohle", welche in vorteilhafter Weise entstehende Zugkräfte aufnehmen kann.

Ist mit dem Entstehen sehr hoher Zugkräfte, d. h., bei sehr stark geneigten Flächen, zu rechnen, kann die untere Seite der Matte als zusätzliche Sicherung mit einem Vlies oder einem Gittergewebe versehen sein, welche dann die entstehenden Zugkräfte aufnehmen können. Bei dieser Ausgestaltung läßt sich das Bindemittel vorteilhafterweise dazu nutzen, die Matte mit dem Vlies bzw. mit dem Gittergeweben zu verkleben. In diesem Fall kann also auch auf ein zeit- und kostenintensives Versteppen oder Vernadeln verzichtet werden.

In einer praktischen Ausgestaltung der Erfindung ist es vorgesehen, den Kokosfasern anorganische Fasern, auf mineralischer Basis und/oder aus Kunststoff, beizumischen, wenn dies für spezielle Anwendungsfälle gewünscht ist. Beispielsweise können den Kokosfasern zur Erhöhung der Brandsicherheit des Vegetationsträgers Mineralwollfasern beigemischt werden

In einer weiteren vorteilhaften Ausgestaltung der Erfindung ist vorgesehen, daß die untere Seite der Matte mit einer Folie aus einem verrottbaren Kunststoff verbunden ist. Eine derartige, relativ schnell verrottende Folie kann mehreren Zwecken dienen.

So kann beispielsweise die Folie Nässe im Vegetationsträger für eine gewisse Zeit zurückhalten. Genutzt werden kann die Folie aber auch dazu, insbesondere wenn der Vegetationsträger auf erdgebundene Flächen, beispielsweise auf Straßenböschungen, aufgelegt wird, um das Durchtreiben von unerwünschtem Saatgut und unerwünschten Pflanzenteilen aus dem Boden in den Vegetationsträger zu verhindern. Denkbar wäre zwar auch die Verwendung einer normalen, nicht verrottenden Folie aus einem Polyolefin, derartige Folien würden aber nach Ablauf der normalen Nutzungsdauer des Vegetationsträgers als unerwünschter Abfall anfallen, wohingegen abbaubare Folien, welche beispielsweise aus Stärkeprodukten aufgebaut sind, zusammen mit der Matte des Vegetationsträgers verrotten und die Umwelt nicht beeinträchtigen.

Weitere Vorteile und Ausgestaltungen der Erfindung werden anhand der Zeichnung, der Patentansprüche und der nachfolgenden Beschreibung erläutert. In der Zeichnung zeigt:
- Fig. 1: einen Querschnitt durch ein Segment eines erfindungsgemäßen Vegetationsträgers,
- Fig. 2: die Teilansicht eines Ausführungsbeispiels des erfindungsgemäßen Vegetationsträgers von der Seite im vergrößerten Maßstab, und
- Fig. 3: eine Ansicht ähnlich der aus Fig. 2 eines weiteren Ausführungsbeispiels des erfindungsgemäßen Vegetationsträgers.

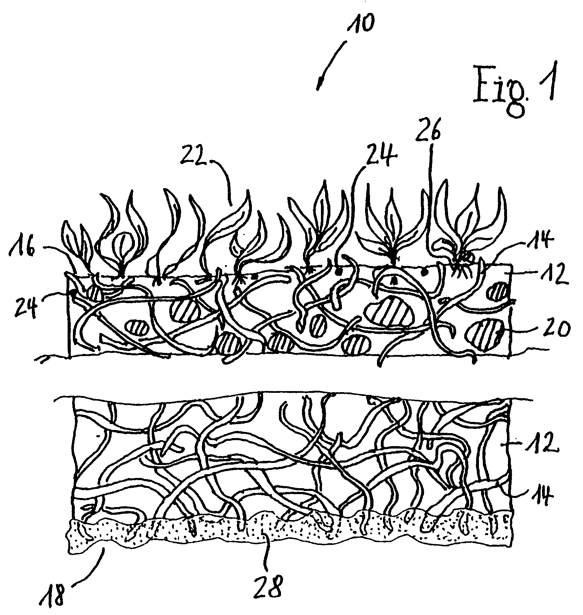

In Fig. 1 ist von der Seite ein Segment eines ersten Ausführungsbeispiels des erfindungsgemäßen Vegetationsträgers 10 dargestellt. Dieser besteht im wesentlichen aus einer Matte 12 aus ineinandergewirrten, ungeordneten organischen Fasern 14, welche in den gezeigten Ausführungsbeispielen Kokosfasern sind. Die Matte 12 weist eine obere Seite 16 und eine untere Seite 18 auf. In die Matte 12 sind Substratpartikel 20, welche als Nährstoffbasis für Pflanzen 22 dienen, und die Pflanzen 22 selbst eingebracht. Die Pflanzen 22, welche aus auf die Matte 12 aufgebrachten Samen 24 oder aus Sporen, Sprossen oder sonstigen keimfähigen Pflanzenteilen hervorgegangen sein können, sind mit ihren Wurzeln 26 im Faserverband der Matte 12 verankert.

Die untere Seite 18 der Matte 12 ist gemäß Fig. 1 vollflächig mit einem Bindemittel 28 versehen. Durch das Bindemittel 28 sind in die Oberfläche der unteren Seite 18 bildende Fasern 14 festgelegt und dadurch gegen ein Herauslösen aus dem Faserverband der Matte 12 gesichert.

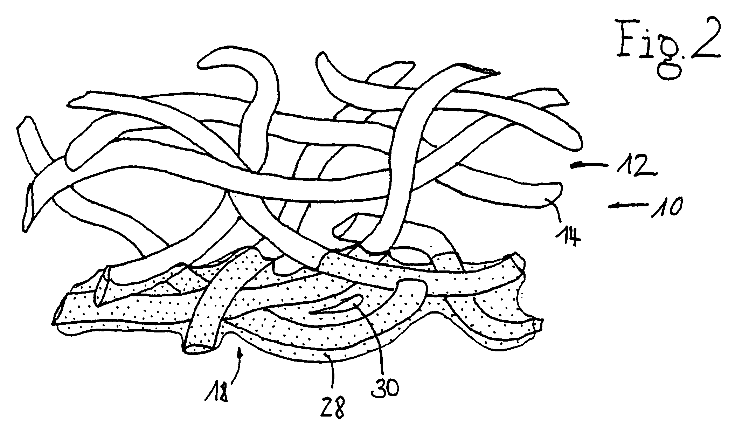

In Fig. 2 ist ein Segment der unteren Seite 18 der Matte 12 des Vegetationsträgers 10 im vergrößerten Maßstab gegenüber Fig. 1 dargestellt. Durch das gerastert dargestellte Bindemittel 28 sind die untersten Fasern 14 der Matte 12 miteinander verklebt. Die Schichtdicke des Bindemittels 28 ist beim Ausführungsbeispiel gemäß Fig. 2 etwas dünner als beim Ausführungsbeispiel gemäß Fig. 1 ausgelegt, so daß sich Hohlräume 30 bilden, die zum einen eine gute Belüftung der Unterseite 18 ermöglichen, aber auch ein Durchwurzeln der Wurzeln 26 auch durch die Unterseite 18 der Matte 12 ermöglichen.

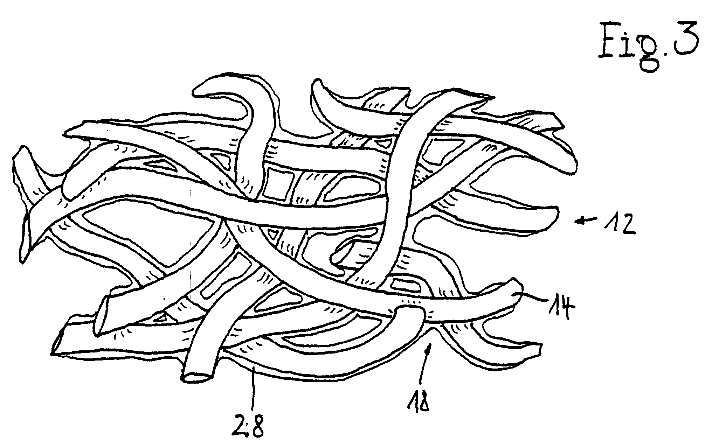

Ein weiteres Ausführungsbeispiel ist im Detail in Fig. 3 dargestellt. Bei diesem sind die Fasern 14 der Matte 12 an ihren gesamten Oberflächen, d. h., über den gesamten Querschnitt der Matte, mit dem Bindemittel 28 versehen, wodurch die aneinander angrenzenden bzw. aneinander anliegenden Fasern 14 durch das Bindemittel 28 miteinander verklebt sind.

Das in den Ausführungsbeispielen dargestellte Bindemittel ist Latex, es kann aber auch ein anderes geeignetes Bindemittel gewählt werden.

## Patentansprüche

1. Vegetationsträger, bestehend aus einer Matte aus ineinandergewirrten organischen Fasern, welche den Vegetationsträger bilden, wobei in die Hohlräume der Matte Substrat eingebracht ist, und wobei eine obere Seite der Matte durch Aufbringen von keimfähigem Pflanzenmaterial, insbesondere durch Samen, Sporen und dergleichen, begrünt ist, und wobei die Fasern der Matte gegen ein Herauslösen aus der Matte gesichert sind, **dadurch gekennzeichnet, daß** die Fasern (14) der Matte (12) Kokosfasern sind und daß die Sicherung gegen das Herauslösen der Fasern (14) aus der Matte (12) ein pflanzenverträgliches Bindemittel (28) ist, welches auf die Oberflächen zumindest eines Teils der Fasern (14) aufgebracht ist und durch welches die Fasern (14) der Matte (12) zumindest teilweise miteinander verklebt sind.

2. Vegetationsträger nach Anspruch 1, **dadurch gekennzeichnet, daß** das Bindemittel (28) oberflächlich auf die untere Seite (18) der Matte (12) aufgetragen ist.

3. Vegetationsträger nach Anspruch 2, **dadurch gekennzeichnet, daß** das Bindemittel (28) mit einer Dicke von 0,01 mm bis 3 mm auf die untere Seite (18) der Matte (12) aufgetragen ist.

4. Vegetationsträger nach einem der Ansprüche 1 - 3, **dadurch gekennzeichnet, daß** das Bindemittel (28) eine Kunststoffdispersion ist.

5. Vegetationsträger nach einem der Ansprüche 1 - 3, **dadurch gekennzeichnet, daß** das Bindemittel Latex ist.

6. Vegetationsträger nach einem der Ansprüche 1 - 3, **dadurch gekennzeichnet, daß** das Bindemittel (28) eine Betumenemulsion ist.

7. Vegetationsträger nach einem der Ansprüche 1 - 3, **dadurch gekennzeichnet, daß** das Bindemittel (28) ein Klebstoff ist.

8. Vegetationsträger nach einem der Ansprüche 1 - 3, **dadurch gekennzeichnet, daß** das Bindemittel (28) ein Harz ist.

9. Vegetationsträger nach einem der Ansprüche 1 - 3, **dadurch gekennzeichnet, daß** das Bindemittel (28) ein Wachs ist.

10. Vegetationsträger nach einem der Ansprüche 1 - 9, **dadurch gekennzeichnet, daß** den organischen Fasern (14) der Matte (12) anorganische Fasern beigemischt sind.

11. Vegetationsträger nach einem der Ansprüche 1 - 10, **dadurch gekennzeichnet, daß** die Matte (12) eine Dicke von 0,5 bis 10 cm aufweist.

12. Vegetationsträger nach einem der Ansprüche 1 - 11, **dadurch gekennzeichnet, daß** die Matte (12) eine Breite von 0,2 bis 4 m aufweist.

13. Vegetationsträger nach einem der Ansprüche 1 - 12, **dadurch gekennzeichnet, daß** die untere Seite (18) der Matte (12) mit einem Vlies versehen ist, welches durch das Bindemittel (28) mit der Matte (12) verbunden ist.

14. Vegetationsträger nach einem der Ansprüche 1 - 12, **dadurch gekennzeichnet, daß** die untere Seite (18) der Matte (12) mit einem Gittergewebe versehen ist, welches durch das Bindemittel (28) mit der Matte (12) verbunden ist.

15. Vegetationsträger nach einem der Ansprüche 1 - 12, **dadurch gekennzeichnet, daß** die untere Seite (18) der Matte (12) mit einer Folie aus einem verrottbaren Kunststoff verbunden ist.

## Claims

1. Vegetation support, consisting of a mat of intertangled organic fibres, which form said support, whereby substrate is introduced into the cavities of the mat, and whereby a top surface of the mat is planted with germinable plant material, particularly with seeds, spores and suchlike, and whereby the fibres of the mat are secured to prevent them coming loose from the mat, **characterised in that** said fibres (14) of the mat (12) are coconut fibres and the means of securing the fibres (14) from coming loose from the mat (12) is a binding agent (28) tolerated by plants, which is applied on the surfaces to at least a part of the fibres (14) of the mat (12), so that said fibres (14) are at least partially stuck together.

2. Vegetation support according to Claim 1, **characterised in that** the binding agent (28) is applied to the whole of the underside (18) of the mat (12).

3. Vegetation support according to Claim 2, **characterised in that** the binding agent (28) is applied to the underside (18) of the mat (12) in an 0.01 to 3mm thick coat.

4. Vegetation support according to one of Claims 1 - 3, **characterised in that** the binding agent (28) is a polymer dispersion or synthetic resin dispersion¹.

5. Vegetation support according to one of Claims 1 - 3, **characterised in that** the binding agent (28) is latex.

6. Vegetation support according to one of Claims 1 - 3, **characterised in that** the binding agent (28) is a bitumen emulsion.

7. Vegetation support according to one of Claims 1 - 3, **characterised in that** the binding agent (28) is an adhesive.

8. Vegetation support according to one of Claims 1 - 3, **characterised in that** the binding agent (28) is a resin.

9. Vegetation support according to one of Claims 1 - 3, **characterised in that** the binding agent (28) is a wax.

10. Vegetation support according to one of Claims 1 - 9, **characterised in that** inorganic fibres are added to the organic fibres (14) of the mat (12).

11. Vegetation support according to one of Claims 1 - 10, **characterised in that** the mat (12) is 0.5 to 10cm thick.

12. Vegetation support according to one of Claims 1 - 11, **characterised in that** the mat (12) is 0.2 to 4m wide.

13. Vegetation support according to one of Claims 1 - 12, **characterised in that** the underside (18) of the mat (12) is provided with a nonwoven material, which is attached to the mat (12) by means of the binding agent (28).

14. Vegetation support according to one of Claims 1 - 12, **characterised in that** the underside (18) of the mat (12) is provided with a open weave fabric², which is attached to the mat (12) by means of the binding agent (28).

15. Vegetation support according to one of Claims 1 - 12, **characterised in that** the underside (18) of the mat (12) is attached to degradable plastic³ sheeting.

## Revendications

1. Support de végétation, composé d'un mat en fibres organiques emmêlées qui forment le support de végétation, un substrat étant introduit dans les creux du mat et le côté supérieur du mat étant gazonné par apport d'un matériel végétal germinatif, en particulier, des semences, des spores et similaires, les fibres du mat étant protégées, afin qu'elles ne puissent pas se détacher du mat, **caractérisé en ce que** les fibres (14) du mat (12) sont des fibres de coco et que la protection contre le détachement des fibres (14) du mat (12) est obtenue par un liant (28) compatible aux plantes, qui est appliqué sur les surfaces d'une partie au moins des fibres (14) et grâce auquel les fibres (14) du mat (12) sont au moins partiellement collées les unes aux autres.

2. Support de végétation suivant la revendication 1 **caractérisé en ce que** le liant (28) est appliqué en surface sur le côté inférieur (18) du mat (12).

3. Support de végétation suivant la revendication 2, **caractérisé en ce que** le liant (28) est appliqué avec une épaisseur comprise entre 0,01 mm et 3 mm sur le côté inférieur (18) du mat (12).

4. Support de végétation suivant une des revendications 1 à 3, **caractérisé en ce que** le liant (28) est une matière synthétique en dispersion.

5. Support de végétation suivant une des revendications 1 à 3, **caractérisé en ce que** le liant est du latex.

6. Support de végétation suivant une des revendications 1 à 3, **caractérisé en ce que** le liant (28) est une émulsion de bitume.

7. Support de végétation suivant une des revendications 1 à 3, **caractérisé en ce que** le liant (28) est une colle.

8. Support de végétation suivant une des revendications 1 à 3, **caractérisé en ce que** le liant (28) est une résine.

9. Support de végétation suivant une des revendications 1 à 3, **caractérisé en ce que** le liant (28) est une cire.

10. Support de végétation suivant une des revendications 1 à 9, **caractérisé en ce que** les fibres organiques (14) du mat (12) sont mélangées à des fibres minérales.

11. Support de végétation suivant une des revendications 1 à 10, **caractérisé en ce que** le mat (12) présente une épaisseur comprise entre 0,5 et 10 cm.

12. Support de végétation suivant une des revendications 1 à 11, **caractérisé en ce que** le mat (12) présente une largeur comprise entre 0,2 et 4 m.

13. Support de végétation suivant une des revendications 1 à 12, **caractérisé en ce que** le côté inférieur (18) du mat (12) est pourvu d'un non-tissé relié au mat (12) au moyen du liant (28).

14. Support de végétation suivant une des revendications 1 à 12, **caractérisé en ce que** le côté inférieur (18) du mat (12) est pourvu d'une structure grillagée reliée au mat (12) au moyen du liant (28).

15. Support de végétation suivant une des revendications 1 à 12, **caractérisé en ce que** le côté inférieur (18) du mat (12) est relié à une feuille en matière artificielle périssable.
